# EUROPEAN PATENT SPECIFICATION

(11) **EP 2 676 791 B1**
(45) Date of publication and mention of the grant of the patent: **27.03.2019**
(21) Application number: 12746686.0
(22) Date of filing: 15.02.2012
(51) Int. Cl.: B32B 5/26, D01F 8/06, D01F 8/14, D04H 1/4291, D04H 1/559, D04H 3/16, B32B 5/02, D04H 1/4374, D04H 3/147, B32B 5/08, B32B 5/14, B32B 7/02, B32B 27/08, B32B 27/12, B32B 27/16, B32B 27/18, B32B 27/32, B32B 27/36

(54) **NONWOVEN LAMINATE**
VLIESSTOFFLAMINAT
STRATIFIÉ NON-TISSÉ

(30) Priority: 15.02.2011 JP 2011029918
(43) Date of publication of application: 25.12.2013
(73) Proprietor: Mitsui Chemicals, Inc., Tokyo 105-7117 (JP)
(72) Inventor: ICHIKAWA, Taro, Sodegaura-shi Chiba 299-0265 (JP); KAWABE, Kuniaki, Sodegaura-shi Chiba 299-0265 (JP)
(74) Representative: Hoffmann Eitle
(86) International application number: PCT/JP2012/053579
(87) International publication number: WO 2012/111724

(56) References cited:
- EP-A1- 0 989 222
- EP-A1- 1 039 007
- EP-A1- 1 369 518
- WO-A1-2004/003278
- JP-A- 9 105 060
- JP-A- 10 280 267
- JP-A- 2002 105 833
- JP-A- 2005 530 938
- JP-A- 2008 213 284
- US-A1- 2006 141 886
- US-A1- 2008 038 982

## Description

### TECHNICAL FIELD

The present invention relates to a nonwoven fabric laminate that is capable of being disinfection-treated with electron beam and is excellent in water resistance, low-temperature sealability and softness.

### BACKGROUND ART

Polyethylene nonwoven fabrics, as compared with polypropylene nonwoven fabrics, are softer and provide superior texture, and are excellent in heat-sealability and have a less degree of deterioration even after irradiated with electron beam or radiation, and therefore are suitable for medical gowns, absorbent articles and packaging/supporting/backing materials for various articles.

However, in general, polyethylene is inferior to polypropylene in melt spinnability, and thus polyethylene nonwoven fabrics obtained by spunbonding method or melt-blowing method hardly have fine fibers and have inferior texture, and therefore use thereof is extremely limited. An exemplary attempt to reduce the fiber diameter of polyethylene fiber is increasing the spinning temperature: in this case, part of polyethylene could be crosslinked to cause gelation, and thus molding stability is not excellent.

In order to address such a problem, there has been proposed a method in which polyethylene fibers, and fibers such as a polyester having a high melting point are spun in parallel from the same spinneret, to obtain fine polyethylene fibers (Patent Literature 1: JP-A-2003-506582). However, this method requires complicated molding apparatus, such as the placement of molding machines for polyethylene and polyester with controlled conditions, and therefore may be inferior in continuous production with stability. In the nonwoven conjugate sheet material obtained by this method, fibers forming the melt-blown nonwoven fabric layer are so-called side-by-side conjugate fibers prepared by bonding polyethylene and polyester, wherein on the surface of the melt-blown nonwoven fabric layer, the polyester part of the conjugate fibers appear. Thus, a laminate of such conjugate fibers with a spunbonded nonwoven fabric is poorly embossed and may be inferior in fuzz resistance after irradiated with electron beam.

Furthermore, in order to provide a melt-blown polyethylene nonwoven fabric having an average fiber diameter of not more than 5 µm, there has been proposed a method which employs a resin composition containing a polyethylene having a weight average molecular weight of 21, 000 to 45, 000 and a melt flow rate of 15 to 250 g/10 min, and a polyethylene wax having a weight average molecular weight of 6, 000 to 12, 000, at weight ratio ranging from 70/30 to 30/70 (Patent Literature 2: JP-B-3995885). However, the melt-blown polyethylene nonwoven fabric obtained by such a method may have insufficient strength when used as a single layer for medical gowns, absorbent articles and packaging/supporting/backing materials for various articles.

In Patent Literature 2, in order to allow a melt-blown polyethylene nonwoven fabric to have improved abrasion resistance and fuzz resistance, there has been proposed a method which laminates a melt-blown polyethylene nonwoven fabric and a spunbonded nonwoven fabric. Specifically, there has been proposed a method of laminating a melt-blown polyethylene nonwoven fabric, with a polyethylene spunbonded nonwoven fabric or with a spunbonded nonwoven fabric formed from a conjugate fiber of polyethylene and polypropylene. However, the nonwoven fabric laminate obtained by laminating the melt-blown polyethylene nonwoven fabric and the polyethylene spunbonded nonwoven fabric, although stable with respect to electron beam or gamma ray, may have insufficient strength. On the other hand, the nonwoven fabric laminate obtained by laminating the melt-blown polyethylene nonwoven fabric and the spunbonded nonwoven fabric formed from the conjugate fiber of polyethylene and polypropylene, although having good barrier properties and strength, may be deteriorated, be degenerated or release odor and the like by electron beam or gamma ray applied upon sterilization/disinfection.

### Citation List

### Patent Literature

[Patent Literature 1] JP-A-2003-506582
[Patent Literature 2] JP-B-3995885
[Patent Literature 3] WO 2004/003278 A1 discloses a spunbond nonwoven fabric which is formed from continuous multiple component filaments which include a polyester component and a polyethylene component. The polyethylene component is a blend of high density polyethylene and a first linear low density polyethylene. The spunbond filaments are preferably formed in a sheath-core configuration with the polyester component in the core and the polyethylene component in the sheath. Composite sheets are provided which include the multiple component spunbond layer and a meltblown layer, wherein the meltblown fibers include a second linear low density polyethylene. The linear low density polyethylenes are preferably formed by polymerization of ethylene with an alpha-olefin co-monomer, where the same co-monomer is used in each of the first and second linear low density polyethylenes.
[Patent Literature 4] EP 1 369 518 A1 discloses a nonwoven fabric of crimped conjugate fibers comprising (1) a first propylene-based polymer component and (2) a second propylene-based polymer component, and a laminate of the nonwoven fabric and other nonwoven fabrics or porous films, in which the melting point of the component (1) is higher by at least 20 °C than that of the component (2), a ratio of the two components in melt flow rate (component (2) /component (1)) is in the range of 0.8 to 1.2, and the component ratio expressed by (1)/(2) (by weight) is 50/50 to 5/95.
[Patent Literature 5] US 2008/0389982 A1 discloses a nonwoven fabric laminate that includes at least one meltblown nonwoven fabric layer and mixed-fiber spunbonded nonwoven fabric layers on both surfaces of the at least one meltblown nonwoven fabric layer, the mixed-fiber spunbonded nonwoven fabric layers each comprising mixed fibers including 10 to 90 wt % of continuous fibers of a thermoplastic elastomer (A) and 90 to 10 wt % of continuous fibers of a thermoplastic resin (B) other than the thermoplastic elastomer (A) ((A)+(B)=100 wt %).

### SUMMARY OF THE INVENTION

### TECHNICAL PROBLEM

It is an object of the present invention to provide a nonwoven fabric laminate that is capable of being disinfection-treated with e.g., electron beam and is excellent in tensile strength, barrier properties, low-temperature sealability, abrasion resistance (fuzz resistance) and softness.

### TECHNICAL SOLUTION

The present invention provides a nonwoven fabric laminate obtained by laminating a spunbonded nonwoven fabric on at least one surface of a melt-blown nonwoven fabric (A), the melt-blown nonwoven fabric (A) comprising fibers of an ethylene-based polymer resin composition of an ethylene-based polymer (a) having a melt flow rate of 10 to 250 g/10 min and an ethylene-based polymer wax (b) comprising a metallocene-catalyzed ethylene-based polymer wax and having a weight average molecular weight of 6,000 to 15,000, at a weight ratio of (a)/(b) in the range of 80/ 20 to 20/80, the spunbonded nonwoven fabric comprising a conjugate fiber formed from a polyester (x) and an ethylene-based polymer (y) such that at least part of the fiber surface is the ethylene-based polymer (y).

### ADVANTAGEOUS EFFECTS OF THE INVENTION

The nonwoven fabric laminate of the present invention is capable of being disinfection/sterilization-treated with electron beam or gamma ray and is excellent in softness, barrier properties (barrier properties of preventing the permeation of an aqueous solution such as water, blood or bacteria containing water; water impermeability), abrasion resistance, tensile strength and low-temperature sealability.

### DESCRIPTION OF EMBODIMENTS

### <Ethylene-based polymer (a)>

The ethylene-based polymer (a), which is one component of the ethylene-based polymer composition forming the melt-blown nonwoven fabric (A) constituting the nonwoven fabric laminate of the present invention, has a melt flow rate of 10 to 250 g/10 min. It is an ethylene homopolymer or a copolymer of ethylene and other α-olefins wherein the ethylene-based polymer (a) is a polymer that contains ethylene as a main component and usually has a density of 0.870 to 0.980 g/cm³, preferably 0.900 to 0.980 g/cm³, more preferably 0.920 to 0.975 g/cm³, particularly preferably 0.940 to 0.970 g/cm³.

The ethylene-based polymer (a) according to the present invention is usually a crystalline resin manufactured and marketed under the name of e.g., high-pressure low-density polyethylene, linear low-density polyethylene (so-called LLDPE), middle-density polyethylene, or high-density polyethylene.

Examples of other α-olefins to be copolymerized with ethylene include α-olefins having 3 to 20 carbon atoms such as propylene, 1-butene, 1-pentene, 1-hexene, 4-methyl-1-pentene, 1-octene, 1-decene, 1-dodecene, 1-tetradecene, 1-hexadecene, 1-octadecene and 1-eicosene. These ethylene-based polymers may be of a single kind, or a mixture of two or more kinds.

If an ethylene-based polymer with a density below the above range is used, the obtainable melt-blown nonwoven fabric may be inferior in durability, heat resistance, strength, and stability after the passage of time. On the other hand, if an ethylene-based polymer with a density exceeding the above range is used, the obtainable melt-blown nonwoven fabric tends to be inferior in heat-sealability and softness.

In the present invention, the density of the ethylene-based polymer (a) is a value obtained by heat treating at 120°C for 1 hour a strand obtained in melt flow rate (MFR) measurement performed at 190°C under a load of 2.16 kg, and then gradually cooling the treated strand over a period of 1 hour to room temperature, and thereafter subjecting the cooled strand to the measurement using a density gradient tube.

The MFR of the ethylene-based polymer (a) according to the present invention (measured in accordance with ASTM D1238 under a load of 2.16 kg at 190°C) is 10 to 250 g/10 min, preferably 20 to 200 g/10 min, more preferably of 50 to 150 g/10 min, in terms of the fineness of the obtainable fiber diameter and spinnability.

The ethylene-based polymer (a) according to the present invention may be a polymer obtainable by various known production methods, for example a high-pressure method, or a middle/low-pressure method using a Ziegler catalyst or a metallocene catalyst. It is particularly preferred to use an ethylene-based polymer obtainable by the polymerization using a metallocene-based catalyst, because of further reducing the fiber diameter of the obtainable fiber.

### <Ethylene-based polymer wax (b)>

The ethylene-based polymer wax (b), which is one component of the ethylene-based polymer composition forming the melt-blown nonwoven fabric (A) constituting the nonwoven fabric laminate of the present invention (b) comprises a metallocene-catalyzed ethylene-based polymer wax and has a weight average molecular weight of 6,000 to 15,000. It is a polymer that is usually produced and marketed as a polyethylene wax and has a lower molecular weight than that of the ethylene-based polymer (a), i.e., a wax polymer.

The ethylene-based polymer wax (b) according to the present invention is an ethylene homopolymer or a copolymer of ethylene and an α-olefin having 3 to 20 carbon atoms; more preferably an ethylene homopolymer. When the ethylene homopolymer is used, kneadability with the ethylene-based polymer (a) is excellent, and spinnability is also excellent. The ethylene-based polymer wax may be of a single kind or a mixture of two or more kinds.

The ethylene-based polymer wax (b) according to the present invention preferably has a softening point as measured in accordance with JIS K2207 of 110 to 145°C. In terms of spinnability and kneadability with the ethylene-based polymer (a) and also in terms of the fiber diameter of the obtainable fiber, the weight average molecular weight (Mw) of the ethylene-based polymer wax (b) is within the range of 6,000 to 15,000, preferably 6,000 to 10,000. If an ethylene-based polymer wax with Mw exceeding the above range is used, the obtainable melt-blown nonwoven fabric may not have sufficiently-fine fibers.

The weight average molecular weight of the ethylene-based polymer wax (b) according to the present invention is determined based on GPC measurement, and is a value measured under the following conditions. The weight average molecular weight was determined by preparing a calibration curve using a commercially available monodispersed standard polystyrene and employing the following conversion method.
Apparatus: gel permeation chromatograph, Alliance GPC2000 (manufactured by Waters)
Solvent: o-dichlorobenzene
Column: TSKgel column (manufactured by Tosoh) × 4
Flow rate: 1.0 ml/min
Specimen: 0.15 mg/mLo-dichlorobenzene solution
Temperature: 140°C
Molecular weight conversion: PE conversion/general calibration method

For the calculation of the general calibration, coefficients of Mark-Houwink viscosity equations were used.
Coefficient of polystyrene (PS): KPS = 1.38 × 10⁻⁴, aPS = 0.70
Coefficient of polyethylene (PE): KPE = 5.06 × 10⁻⁴, aPE = 0.70

The ethylene-based polymer wax (b) according to the present invention has a density as measured in accordance with JIS K6760, which is not particularly limited, usually of 0.890 to 0.980 g/cm³, preferably 0.910 to 0.980 g/cm³, more preferably 0.920 to 0.980 g/cm³, particularly preferably 0.940 to 0.980 g/cm³. By using the ethylene-based polymer wax (b) having such a density range, kneadability with the ethylene-based polymer (a) is excellent, and spinnability, and stability after the passage of time are also excellent.

The ethylene-based polymer wax (b) according to the present invention may be produced by a commonly-used method which is not particularly limited, such as production method of low molecular weight polymer polymerization, or method of thermally degrading a high molecular weight ethylene-based polymer to reduce its molecular weight. As is the case with the ethylene-based polymer (a), it is preferred to use an ethylene-based polymer wax obtainable by using a metallocene-based catalyst, because of further reducing the fiber diameter of the obtainable fiber.

The metallocene catalyst is not particularly limited, and examples thereof are those described in JP-A-2007-246832. Examples of preferred metallocene-based catalysts are olefin polymerization catalysts comprising:
(E) a metallocene compound of a transition metal selected from Group 4 of the periodic table, and
(F) at least one kind of compound selected from (f-1) organic aluminum-oxy compounds, (f-2) compounds that react with the bridged metallocene compound (A) to form an ion pair and (f-3) organoaluminum compounds.

### <Ethylene-based polymer composition>

The ethylene-based polymer composition, which forms the melt-blown nonwoven fabric (A) according to the present invention, is a composition containing the ethylene-based polymer (a) and the ethylene-based polymer wax (b). The ethylene-based polymer composition according to the present invention, by containing the ethylene-based polymer wax (b), allows the obtainable melt-blown nonwoven fabric to have a reduced average fiber diameter. If the amount of the ethylene-based polymer wax (b) is small, the average fiber diameter may not be reduced. On the other hand, if the amount of the ethylene-based polymer wax (b) is too large, the spinning may be difficult, and the obtainable fiber tends to have reduced strength. In view of this, the ratio of the ethylene-based polymer (a) to the ethylene-based polymer wax (b), (a)/(b) weight ratio, is preferably in the range of 20/80 to 80/20, particularly preferably 30/70 to 70/30.

The ethylene-based polymer composition according to the present invention usually has a half-crystallization time of 85 sec or more, preferably 87 sec or more, more preferably 92 sec or more, still more preferably 97 sec or more, most preferably 102 sec or more. The upper limit of the half-crystallization time is not particularly limited.

In the present invention, the half-crystallization time was measured by the following method. Using a differential scanning calorimeter measurement apparatus (DSC7 manufactured by PerkinElmer Co., Ltd.), the specimen, set in an amount of about 5 mg, was allowed to stand at 200°C for 5 min and thereby was completely molten. Thereafter, the molten specimen was rapidly cooled to 115°C at a temperature cooling rate of 320°C/min to perform isothermal crystallization. The time taken from the start of cooling until the crystallization heat reached half of the total heating value was defined as half-crystallization time.

The ethylene-based polymer composition with the half-crystallization time satisfying the above range is obtained by using a metallocene-catalyzed polymer at least as the ethylene-based polymer wax (b). By using a metallocene-catalyzed polymer as the ethylene-based polymer wax (b), an ethylene-based polymer composition with the half-crystallization time satisfying the above range can be obtained.

For the production of the ethylene-based polymer composition according to the present invention, it is possible to suitably use known catalysts such as magnesium-supported titanium catalysts described in e.g., JP-A-S57(1982)-63310, JP-A-S58(1983)-83006, JP-A-H3(1991)-706, JP-B-3476793, JP-A-H4(1992)-218508, JP-A-2003-105022, or metallocene catalysts described in e.g., WO01/53369, WO01/27124, JP-A-H3(1991)-193796 or JP-A-H02(1990)-41303.

The ethylene-based polymer composition according to the present invention preferably comprises a transition metal compound. The composition comprising a transition metal compound is obtained by using a metallocene-catalyzed polymer as at least one of the ethylene-based polymer (a) and the ethylene-based polymer wax (b) that form the ethylene-based polymer composition. Thus, as a transition metal compound, zirconium, titanium, hafnium compounds and the like contained in metallocene catalysts can be mentioned.

The total content of transition metals contained in the transition metal compound in the ethylene-based polymer composition is usually not more than 2 ppm, preferably not more than 1 ppm, more preferably not more than 0.5 ppm, most preferably not more than 0.3 ppm. The total content of transition metals is calculated by collecting a specimen in a fluororesin-made container, adding an ultra-high-purity nitric acid thereto, and then microwave-decomposing the mixture, followed by ICP mass analysis method (ICP-MS method).

The ethylene-based polymer composition according to the present invention may optionally contain other polymers and compounding agents such as coloring agents, stabilizers and nucleating agents, in a range that does not impair the object of the present invention. Examples of the optional components are known ones including various stabilizers such as heat stabilizers and weathering stabilizers, antistatic agents, hydrophilizing agents, water-repellents, nucleating agents, slip agents, antiblocking agents, anti-fogging agents, lubricating agents, dyes, pigments, natural oil and synthetic oil.

Examples of the stabilizers include:
anti-aging agents such as 2,6-di-t-butyl-4-methyl-phenol (BHT);
phenol-based antioxidants such as tetrakis[methylene-3-(3,5-di-t-butyl-4-hydroxyphenyl)propio nate]methane, β-(3,5-di-t-butyl-4-hydroxyphenyl)propionic acid alkylesters, 2,2'-oxamidebis[ethyl-3-(3,5-di-t-butyl-4-hydroxyphenyl)pro pionate], Irganox 1010 (product name; hindered phenol-based antioxidant);
fatty acid metal salts such as zinc stearate, calcium stearate, calcium 1,2-hydroxystearate;
polyhydric alcohol fatty acid esters such as glycerol monostearate, glycerol distearate, pentaerythritol monostearate, pentaerythritol distearate, and pentaerythritol tristearate.

These may be used in combination.

Fillers may be incorporated, such as silica, diatomaceous earth, alumina, titanium oxide, magnesium oxide, pumice powder, pumice balloon, aluminum hydroxide, magnesium hydroxide, basic magnesium carbonate, dolomite, calcium sulfate, potassium titanate, barium sulfate, calcium sulphite, talc, clay, mica, asbestos, calcium silicate, montmorillonite, bentonite, graphite, aluminum powders and molybdenum sulfide.

The ethylene-based polymer composition according to the present invention is obtained by mixing the ethylene-based polymer (a), the ethylene-based polymer wax (b), and these optional components by various known methods.

### <Melt-blown nonwoven fabric (A)>

The melt-blown nonwoven fabric (A) constituting the nonwoven fabric laminate of the present invention is a melt-blown nonwoven fabric obtained from the ethylene-based polymer composition. The fibers forming the melt-blown nonwoven fabric usually have an average fiber diameter of not more than 10 µm. In order to obtain a melt-blown nonwoven fabric having low basis weight and much superior barrier properties, it is desirable that the fibers forming the melt-blown nonwoven fabric have an average fiber diameter of 0.5 to 8 µm, more preferably 1 to 5 µm, still more preferably 1 to 4 µm, particularly preferably 2 to 4 µm.

When the average fiber diameter is within the above range, the obtainable melt-blown nonwoven fabric has good evenness, and the resultant nonwoven fabric is excellent in barrier properties.

The melt-blown nonwoven fabric (A) according to the present invention usually has a basis weight of not less than 0.5 g/m², preferably 10 to 50 g/m², more preferably 15 to 45 g/m², still more preferably 20 to 40 g/m². If the basis weight is too low, the resulting nonwoven fabric laminate may have lower water pressure resistance and inferior barrier properties. The upper limit of the basis weight is not particularly limited, but if the basis weight is too high, the resulting nonwoven fabric laminate tends to have inferior softness. On the other hand, in the use that does not require such high barrier properties but requires softness, heat-sealability and lightness, such as the use in e.g., sanitary materials, the basis weight is 0.5 to 5 g/m², more preferably 0.5 to 3 g/m².

### <Production method of Melt-blown nonwoven fabric>

The melt-blown nonwoven fabric (A) according to the present invention may be produced using the ethylene-based polymer composition by known melt-blown nonwoven fabric production method. Specifically, for example, a melt-blowing method can be performed such that the ethylene-based polymer composition is melt kneaded with an extruder or the like, and the molten substance is discharged from a spinneret having spinning nozzles, and blown by a high-speed/high temperature airflow injected from the periphery of the spinneret, to be deposited on a collecting belt as self-adhesive microfibers in a specific thickness to thereby produce a web. This method may be subsequently followed by entangling treatment as needed.

As a method of entangling the deposited web, various methods can be used appropriately, such as heat embossing using an emboss roll, fusion bonding using ultrasonic wave, fiber entangling method using a water jet, fusion bonding using a hot air through, a method using needle punching. In obtaining the nonwoven fabric laminate of the present invention, heat embossing is preferable in terms of the simplicity of laminating procedure.

### <Polyester (x)>

The polyester (x), which is one component of the conjugate fiber forming the spunbonded nonwoven fabric constituting the nonwoven fabric laminate of the present invention, is a known polyester used as a raw material for spunbonded nonwoven fabrics, and specific examples thereof include polyethylene terephthalate, polybutylene terephthalate, polytrimethylene terephthalate, and copolymers and terpolymers thereof.

The molecular weight of the polyester (x) according to the present invention is not particularly limited as long as the polyester (x) is capable of being conjugated with a later-described ethylene-based polymer (y) to produce a spunbonded nonwoven fabric. Of polyesters commercially available or industrially available, those commercially available for fiber use are particularly desired: specifically, those having an intrinsic viscosity of 0.50 to 1.20 are preferable.

### <Ethylene-based polymer (y)>

The ethylene-based polymer (y), which is one component of the conjugate fiber forming the spunbonded nonwoven fabric constituting the nonwoven fabric laminate of the present invention, is a resin similar to the ethylene-based polymer (a), and is an ethylene homopolymer or a copolymer of ethylene and other α-olefins wherein the ethylene-based polymer (y) is a polymer that contains ethylene as a main component and usually has a density of 0.870 to 0.990 g/cm³, preferably 0.900 to 0.980 g/cm³, more preferably 0.910 to 0.980 g/cm³.

The ethylene-based polymer (y) according to the present invention is usually a crystalline resin manufactured and marketed under the name of e.g., high-pressure low-density polyethylene, linear low-density polyethylene (so-called LLDPE), middle-density polyethylene, or high-density polyethylene.

Examples of other α-olefins to be copolymerized with ethylene include α-olefins having 3 to 20 carbon atoms such as propylene, 1-butene, 1-pentene, 1-hexene, 4-methyl-1-pentene, 1-octene, 1-decene, 1-dodecene, 1-tetradecene, 1-hexadecene, 1-octadecene and 1-eicosene. These ethylene-based polymers may be of a single kind, or a mixture of two or more kinds.

The MFR of the ethylene-based polymer (y) according to the present invention is not particularly limited as long as the ethylene-based polymer (y) is capable of being conjugated with the polyester (x) to produce the spunbonded nonwoven fabric, but the ethylene-based polymer (y) usually has MFR (measured in accordance with ASTM D1238 under a load of 2.16 kg at 190°C) of 0.5 to 60 g/10 min, preferably 10 to 60 g/10 min, in terms of spinnability.

The ethylene-based polymer (y) according to the present invention may be a polymer obtained by various known production methods, such as high pressure method, and middle/low pressure method using a Ziegler catalyst or a metallocene catalyst, as is the case with the ethylene-based polymer (a).

The ethylene-based polymer (y) according to the present invention may contain 0.1 to 0.5% by weight of a slip agent composed of a fatty acid amide such as oleic amide, erucamide and stearic amide. When the ethylene-based polymer (y) contains a slip agent, the resulting spunbonded nonwoven fabric has much improved fuzz resistance.

The polyester (x) and/or the ethylene-based polymer (y) according to the present invention may contain other polymers, coloring agents, various stabilizers such as heat stabilizers and weathering stabilizers, antistatic agents, hydrophilizing agents, water-repellents, nucleating agents, slip agents, antiblocking agents, anti-fogging agents, lubricating agents, dyes, pigments, natural oil and synthetic oil, in a range that does not impair the object of the present invention.

### <Conjugate fiber>

In the spunbonded nonwoven fabric according to the present invention, the conjugate fiber forming the spunbonded nonwoven fabric is a conjugate fiber formed from the polyester (x) and the ethylene-based polymer (y) such that at least part of the fiber surface is the ethylene-based polymer (y).

As long as the ethylene-based polymer (y) is exposed on part of the surface of the conjugate fiber, the shape of the conjugate fiber is not particularly limited. By the ethylene-based polymer (y) being exposed on part of the surface of the conjugate fiber, the adhesion with the melt-blown nonwoven fabric (A) is excellent.

Of these conjugate fibers, preferred are conjugate fibers having a cross section with a weight ratio of the polyester (x) to the ethylene-based polymer (y), [(x)/(y)], being in the range of 5/95 to 95/5, particularly preferably 20/80 to 80/20. It is preferable that the ratio of the polyester-based polymer (x) to the ethylene-based polymer (y) is within this range, because the resulting spunbonded nonwoven fabric is excellent in the balance between strength and softness.

As the conjugate fiber according to the present invention, preferred is a concentric or eccentric core-sheath type conjugate fiber composed of a core formed from the polyester-based polymer (x) and a sheath formed from the ethylene-based polymer (y), or a side-by-side type conjugate fiber formed from the polyester-based polymer (x) and the ethylene-based polymer (y).

The conjugate fiber according to the present invention usually has an average fiber diameter of 5 to 30 µm (about 0.2 to 7 denier), preferably 10 to 20 µm.

### <Spunbonded nonwoven fabric>

The spunbonded nonwoven fabric constituting the nonwoven fabric laminate of the present invention is a nonwoven fabric comprising a conjugate fiber formed from the polyester (x) and the ethylene-based polymer (y) such that at least part of the fiber surface is the ethylene-based polymer (y).

The spunbonded nonwoven fabric according to the present invention usually has a basis weight of 5 to 50 g/m², preferably 10 to 25 g/m².

### <Production method of Spunbonded nonwoven fabric>

The spunbonded nonwoven fabric according to the present invention may be produced by known spunbonded nonwoven fabric production method. Specifically, for example, a conjugate melt-spinning method can be performed such that the polyester (x) and the ethylene-based copolymer (y) are each molten in a desired range with a separate extruder or the like; and each molten substance is discharged from a spinneret having spinning nozzles that is designed to form and discharge a desired conjugate structure, to be spun into conjugate long fiber filaments. Then, the filaments thus spun are cooled with a cooling fluid, and given tension by drawing air to allow the filaments to have a desired fineness. Thereafter, the spun filaments are collected and deposited in a specific thickness on a collecting belt. Then, the filaments are subjected to entangling treatment. This method provides a spunbonded nonwoven fabric. As a method of entangling treatment, the methods adopted with regard to the melt-blown nonwoven fabric can be mentioned. Of them, heat embossing is preferable. In performing heat embossing, usually, the embossed area percentage, which is appropriately determined, is preferably 5 to 30%.

### <Nonwoven fabric laminate>

The nonwoven fabric laminate of the present invention is formed by laminating the spunbonded nonwoven fabric comprising the above conjugate fiber on at least one surface of the melt-blown nonwoven fabric (A).

The nonwoven fabric laminate of the present invention, wherein on the melt-blown nonwoven fabric (A), the spunbonded nonwoven fabric comprising the conjugate fiber is laminated, is excellent in softness, barrier properties (high water pressure resistance), strength, durability, evenness, cloth-like appearance and texture.

The structure of the nonwoven fabric laminate of the present invention is not particularly limited, as long as at least one surface layer thereof is a layer formed from the spunbonded nonwoven fabric, but preferred is a layer structure consisting of the spunbonded nonwoven fabric layer/the melt-blown nonwoven fabric (A) layer, and a layer structure consisting of the spunbonded nonwoven fabric layer/the melt-blown nonwoven fabric (A) layer/the spunbonded nonwoven fabric layer.

The basis weight of the nonwoven fabric laminate of the present invention, which can be appropriately determined depending on use, required quality, economy and the like of the nonwoven fabric laminate, is usually 6 to 150 g/m², more preferably 11 to 120 g/m², still more preferably 15 to 100 g/m².

In the nonwoven fabric laminate of the present invention, on at least one surface of the melt-blown nonwoven fabric (A), the spunbonded nonwoven fabric comprising the conjugate fiber is laminated, and both the nonwoven fabrics contain ethylene-based polymers. Accordingly, when the melt-blown nonwoven fabric (A) is bonded with the spunbonded nonwoven fabric by heat embossing or the like, the bonding can be performed easily, to provide a nonwoven fabric laminate having an excellent interlayer adhesive strength.

The nonwoven fabric laminate of the present invention is stable with respect to electron beam or gamma ray applied upon sterilization/disinfection.

The nonwoven fabric laminate of the present invention is excellent in evenness as well as in breathability, barrier properties and softness. In addition, the nonwoven fabric laminate of the present invention, wherein one surface layer or both surface layers are formed from the spunbonded nonwoven fabric layer, is also excellent in strength, durability, abrasion resistance and fuzz resistance.

The nonwoven fabric laminate of the present invention usually has a cantilever value as an index of softness of not more than 100 mm, preferably not more than 90 mm, more preferably not more than 80 mm; and usually has a water pressure resistance of not less than 350 mmAq, preferably not less than 500 mmAq, more preferably not less than 600 mmAq.

The nonwoven fabric laminate of the present invention may be subjected to water repellent finishing as needed. The water repellent finishing can be performed by applying a water repellent agent such as a fluorine-based water repellent agent. The appropriate deposition percentage of the water repellent agent is 0.5 to 5.0% by weight. An exemplary method for imparting alcohol repellent properties is a method in which a fluorine-based finishing agent is deposited on the nonwoven fabric (b) at a deposition percentage of 0.01 to 3% by weight. At this time, how to deposit and dry the finishing agent are not particularly limited. Examples of the method for depositing the finishing agent include spraying, soaking in a finishing agent bath followed by mangling, and coating. Examples of the method for drying the finishing agent include a method using a hot air drier, a method using a tenter, and a method of contacting with a heat generator.

Thereby, the nonwoven fabric laminate, for example when used for medical gowns, prevents the permeation of water and alcohol, enabling those who wear the laminate to feel comfortable.

The nonwoven fabric laminate of the present invention may be provided with antistatic properties. An exemplary method of imparting antistatic properties is a method of applying an appropriate antistatic property-imparting agent, such as fatty acid esters and quaternary ammonium salts. As the degree of antistatic properties, in the JIS L1094C method under the atmosphere of 20°C and 40% RH, not more than 1000 V is preferred (a cotton cloth is used as a rubbing cloth).

Thereby, the nonwoven fabric laminate, for example when used for medical gowns, enables those who wear the laminate to feel comfortable.

With the nonwoven fabric laminate of the present invention, short fiber/long fiber nonwoven fabrics of e.g., cotton, cupra, rayon, polyolefin-based fibers, polyamide-based fibers or polyester-based fibers may be further laminated in a range that does not impair the object of the present invention.

The nonwoven fabric laminate of the present invention is applicable to a whole range of sanitary materials, daily commodities, industrial materials and medical materials. The nonwoven fabric laminate of the present invention, because of its excellence particularly in softness, breathability and barrier properties, is suitably used for disposable diapers, sanitary napkins, base cloth such as poultices, materials for e.g., bed covers. In addition, the nonwoven fabric laminate of the present invention, which is formed from the polyethylene-based fabrics and the polyester-based fabrics, is stable with respect to electron beam or gamma ray applied upon sterilization/disinfection, and thus can be suitably used particularly as materials of gowns, caps, masks and drapes that are employed in hospitals and the like. Furthermore, the nonwoven fabric laminate of the present invention, because of its satisfactory after-processability such as heat-sealability, can be applied to a whole range of daily commodities including oxygen scavengers, portable body warmers, heated poultice, masks, CD (compact disk) bags, food packaging materials and clothing covers. For the same reason, the nonwoven fabric laminate of the present invention is suitably employable for automotive interiors and various backing materials. The nonwoven fabric laminate of the present invention, which is formed from fine fibers, is widely applicable as liquid filter or air filter materials.

### <Production method of Nonwoven fabric laminate>

The production method of the nonwoven fabric laminate of the present invention is not particularly limited as long as being a method by which the melt-blown nonwoven fabric (A) and the spunbonded nonwoven fabric are integrated to form a single laminate.

Specific employable examples without being limited thereto include:
(i) a method in which on a previously-prepared spunbonded nonwoven fabric, fibers obtained from the ethylene-based polymer composition that are obtained by melt-blowing method are directly deposited to form a melt-blown nonwoven fabric (A), and thereafter the spunbonded nonwoven fabric and the melt-blown nonwoven fabric are fusion bonded to each other by heat embossing or the like, to produce a two-layer laminate;
(ii) a method in which fibers obtained from the ethylene-based polymer composition that are obtained by melt-blowing method are directly deposited on a previously-prepared spunbonded nonwoven fabric to form a melt-blown nonwoven fabric (A), and further on the melt-blown nonwoven fabric (A), a conjugate fiber formed by spunbonding method is directly deposited to form a spunbonded nonwoven fabric; and thereafter the spunbonded nonwoven fabric, the melt-blown nonwoven fabric (A), and the spunbonded nonwoven fabric are fusion bonded to one another, to produce a three-layer laminate;
(iii) a method in which a previously-prepared spunbonded nonwoven fabric and a separately-produced melt-blown nonwoven fabric (A) are stacked on each other, and both the nonwoven fabrics are thermocompressed to thereby be fusion bonded to each other, to produce a laminate; and
(iv) a method in which a previously-prepared spunbonded nonwoven fabric and a separately-prepared melt-blown nonwoven fabric (A) are bonded by an adhesive such as a hot melt adhesive or a solvent-based adhesive, to produce a laminate.

To produce the nonwoven fabric laminate of the present invention, the surface where the melt-blown nonwoven fabric (A) contacts with the spunbonded nonwoven fabric may be entirely thermal fusion bonded or may be partly thermal fusion bonded. It is preferred, however, that by heat embossing, the surface where each nonwoven fabric layer contacts with one another is partly thermal fusion bonded. At this time, the fusion-bonded area (corresponding to the area embossed by an embossing roll) is preferably 5 to 35% of the contacting area, more preferably 10 to 30% of the contacting area. When the fusion-bonded area is within the above range, the nonwoven fabric laminate is excellent in the balance between adhesive strength and softness.

In the method of bonding the spunbonded nonwoven fabric and the melt-blown nonwoven fabric (A) by an adhesive, examples of the hot melt adhesive include resin-based adhesives such as vinyl acetate-based ones and polyvinyl alcohol-based ones; and rubber-based adhesives such as styrene/butadiene-based ones and styrene/isoprene-based ones. Examples of the solvent-based adhesive include organic solvent adhesives and aqueous emulsion adhesives, e.g. solvent-based rubber type adhesives such as styrene/butadiene-based ones, styrene/isoprene-based ones and urethane-based ones; solvent-based resin type adhesives such as vinyl acetate-based ones and vinyl chloride-based ones. Of these adhesives, rubber-based hot melt adhesives such as styrene/isoprene-based ones and styrene/butadiene-based ones are preferable, in terms of their ability to allow for retaining the texture, the properties of spunbonded nonwoven fabric.

### EXAMPLES

Hereinafter, with reference to Examples and Comparative Examples of the present invention, the present invention is more specifically described. In the Examples and Comparative Examples, measurement of respective properties of the melt-blown nonwoven fabric, the spunbonded nonwoven fabric, or the nonwoven fabric laminate was performed under the following methods.

### (1) Average fiber diameter

A specimen was collected from the obtained nonwoven fabric, and was observed with a scanning electron microscope at a magnification of 1000, to measure fiber diameters (µm) of 30 constituent fibers, and an average fiber diameter thereof was calculated.

### (2) Basis weight

In accordance with JIS-L1096-1990, 6.4.2, "mass per unit area under standard conditions", the basis weight was measured. From the obtained nonwoven fabric, circular test pieces each of 100 cm² were collected. The test pieces were collected at a place that was arbitrarily determined in the machine direction (MD) and were collected at 20 points with a uniform interval that would form a straight line in the direction crossing the machine direction (CD). The test pieces were not collected at a place between each end and 20 cm inward from each end of the nonwoven fabric sample in the direction crossing the machine direction (CD). Using pan electronic balance (EB-330 manufactured by Shimadzu Corporation), a mass (g) of each test piece collected was measured. Then, an average mass (g) of the test pieces was calculated. The average mass calculated was converted to a mass (g) per 1 m², which was rounded to one decimal place to provide a basis weight (g/m²) of each nonwoven fabric sample.

### (3) Evaluation of tensile strength

From the nonwoven fabric laminate, a test piece of 25 mm in width × 250 mm in length was collected, and was subjected to tensile test in two directions: the machine direction (MD) and the direction crossing the machine direction (CD), the distance between chucks being 50 mm, the tensile rate being 100 mm/min. A maximum tensile load was defined as tensile strength (N/25 mm). The measurement was performed five times and an average value of the values obtained five times was calculated.

### (4) Water pressure resistance (barrier properties)

In accordance with A method (low water pressure method) stipulated in JIS L 1096, the water pressure resistance of the nonwoven fabric laminate was measured.

### (5) Measurement of cantilever value (flexural rigidity)

In accordance with JIS L1096 (6.19.1 A method), in a constant temperature chamber at a temperature of 20±2°C and a humidity of 65±2% as specified in JIS Z8703 (standard conditions for testing), from the nonwoven fabric laminate, five test pieces each 20 mm in width × 150 mm in length were collected in the machine direction (MD). Each test piece was placed on a horizontal, smooth-surface table having a 45° slope surface, with the shorter side of the test piece aligned at the scale baseline. The test piece was slowly slid toward the slope surface by hand. When the central point on one edge of the test piece touched the slope surface, the length by which the other edge had moved was measured by reading the scale. The flexural rigidity was represented by length (mm) by which the test piece had moved. Each of the five test pieces was tested on both the front and back surfaces, and an average value was calculated. Under the measurement so-called 45° cantilever method, the nonwoven fabric with lower flexural rigidity is determined to have more softness. In the use for clothing, when the flexural rigidity value is 100 mm or less, the softness is determined to be good. However, no limitation is necessarily made to this value, since required softness vary depending on use purpose and the like.

### (6) Evaluation of fuzz resistance

From the nonwoven fabric laminate, 40 test pieces each having a size of 300 mm (longitudinal direction: MD) × 25 mm (transverse direction: CD) were collected, and the fuzz resistance was evaluated using an apparatus, "rubbing tester II (Gakushin-type)" described in JIS-L0849-2004, 5, 5.1, b. Specifically, as such an apparatus, RT-100 manufactured by DAIEI KAGAKU SEIKI MFG. Co., Ltd. was employed. A 200 g friction block was used. A packing adhesive tape (cloth) No. 314 (manufactured by Rinrei Tape Co., Ltd.) was placed such that the adhesive surface of the adhesive tape would rub the testing surface of the test piece. To prevent the test piece from moving during the test, sandpaper (No. 400) was fitted to a table of the apparatus with the abrasive surface upward. The test piece was placed on the abrasive surface and was fitted to the tester table with the testing surface upward. After the fitting of the test piece, the testing surface of the test piece and the non-adhesive surface of the adhesive tape were rubbed against each other back and forth 50 times. The rubbed testing surface of the test piece was observed, and the fuzz resistance was graded based on the following criteria.
1 point: There was no fuzz.
2 points: A small fuzzball started to form.
3 points: A recognizable fuzzball started to form, and a plurality of small fuzzballs formed.
4 points: Recognizable large fuzzballs formed, and a plurality of fibers started to lift.
5 points: Fibers were considerably torn off and the test piece became thin.
6 points: Fibers were torn off and the test piece was broken.

### (Example 1)

### <Production of Melt-blown nonwoven fabric>

A mixture of 50 parts by weight of a metallocene-catalyzed ethylene/1-hexene copolymer [manufactured by Prime Polymer Co. , Ltd., product name: EVOLUE H SP50800P, density: 0.951 g/cm³, MFR: 135 g/10 min] and 50 parts by weight of a metallocene-catalyzed ethylene-based polymer wax [manufactured by Mitsui Chemicals, Inc., product name: EXCEREX 40800T, density: 0.980 g/cm³, weight average molecular weight: 6,900] was molten, and the molten resin was discharged from a spinneret with nozzles having 360 orifices with a diameter of 0.4 mm, at 0.7 g/min per a single orifice, and thereby melt spinning by melt-blowing method was performed to form microfibers. The microfibers were deposited on a collecting surface, to produce a melt-blown nonwoven fabric (MB) having a basis weight of 40 g/m².

### <Production of Spunbonded nonwoven fabric>

An ethylene/1-butene copolymer [manufactured by Prime Polymer Co., Ltd., product name: NEO-ZEX NZ50301, density: 0.950 g/cm³, MFR (measured in accordance with ASTM D1238 at a temperature of 190°C, under a load of 2.16 kg): 30 g/10 min] as a sheath-forming ethylene-based copolymer, and a polyethylene terephthalate [manufactured by Mitsui Chemicals, Inc., product name: J125] as a core-forming polyester-based polymer, were extruded under spinning conditions in which the discharge amount per a single orifice was 0.5 g/min/orifice and the resin temperature was 270°C. The filaments extruded were cooled, and drawn such that the filaments had a fineness 2d. The filaments were collected and heat-embossed. This method provided a spunbonded nonwoven fabric (SB) having a basis weight of 15 g/m², formed from a concentric core-sheath conjugate fiber (PE-based/PET conjugate) having a core percentage of 50% by weight (core:sheath = 50:50 in weight ratio).

### <Production of Nonwoven fabric laminate>

On both surfaces of the melt-blown nonwoven fabric obtained above, the spunbonded nonwoven fabric was stacked. Then, the nonwoven fabrics were thermal fusion bonded to each other by heat embossing (embossed area percentage: 18%) at 90°C at a linear pressure of 60 kg/cm, to obtain a three-layer nonwoven fabric laminate. Properties of the resulting nonwoven fabric laminate were measured by the method described above. Results are set forth in Table 1.

### (Example 2) (Reference Example)

The melt-blown nonwoven fabric employed in Example 1 was replaced with a mixture of 30 parts by weight of a metallocene-catalyzed ethylene/1-hexene copolymer [manufactured by Prime Polymer Co., Ltd., product name: EVOLUE H SP50800P, density: 0.951 g/cm³, MFR: 135 g/10 min] and 70 parts by weight of a Ziegler-catalyzed ethylene-based polymer wax [manufactured by Mitsui Chemicals, Inc., product name: Highwax 800P, density: 0.970 g/cm³, weight average molecular weight: 12,700], and the same production procedure as in Example 1 was performed, to obtain a three-layer nonwoven fabric laminate. Properties of the resulting nonwoven fabric laminate were measured by the methods described above. Results are set forth in Table 1.

### (Example 3)

The same procedure as in Example 1 was performed except that the basis weight of the melt-blown nonwoven fabric was 30 g/m², to obtain a three-layer nonwoven fabric laminate. Properties of the resulting nonwoven fabric laminate were measured by the method described above. Results are set forth in Table 1.

### (Example 4)

The same procedure as in Example 1 was performed except that the basis weight of the melt-blown nonwoven fabric was 20 g/m², to obtain a three-layer nonwoven fabric laminate. Properties of the resulting nonwoven fabric laminate were measured by the method described above. Results are set forth in Table 1.

### (Example 5)

The same procedure as in Example 1 was performed except that the basis weight of the melt-blown nonwoven fabric was 10 g/m², to obtain a three-layer nonwoven fabric laminate. Properties of the resulting nonwoven fabric laminate were measured by the method described above. Results are set forth in Table 1.

### (Example 6)

The same procedure as in Example 1 was performed except that a mixture of 30 parts by weight of a Ziegler-catalyzed ethylene/1-butene copolymer [manufactured by Prime Polymer Co., Ltd., product name: NEO-ZEX NZ50301, density: 0.950 g/cm³, MFR: 30 g/10 min) and 70 parts by weight of a metallocene-catalyzed ethylene-based polymer wax [manufactured by Mitsui Chemicals, Inc., product name: EXCEREX 40800T, density: 0.980 g/cm³, weight average molecular weight: 6,900] was used to obtain a melt-blown nonwoven fabric having a basis weight 50 g/m², to obtain a three-layer nonwoven fabric laminate. Properties of the resulting nonwoven fabric laminate were measured by the method described above. Results are set forth in Table 1.

### (Example 7)

The nonwoven fabric laminate obtained in Example 1 was irradiated with electron beam at 45 KGy, and allowed to stand at 60°C for 1 week, which was followed by measurement. Then, properties of the nonwoven fabric laminate were measured by the methods described above. Results are set forth in Table 1.

### (Example 8)

The same procedure as in Example 1 was performed except that a mixture of 40 parts by weight of the ethylene/1-butene copolymer employed in Example 6 and 60 parts by weight of a metallocene-catalyzed ethylene-based polymer wax (weight average molecular weight: 6,900) was used to obtain a melt-blown nonwoven fabric having a basis weight of 50 g/m², to obtain a three-layer nonwoven fabric laminate. Properties of the resulting nonwoven fabric laminate were measured by the method described above. Results are set forth in Table 1.

### (Example 9)

The same procedure as in Example 1 was performed except that a mixture of 50 parts by weight of a Ziegler-catalyzed ethylene/1-butene copolymer [Prime Polymer Co., Ltd., prototype, density: 0.935 g/cm³, MFR: 150 g/10 min]) and 50 parts by weight of a metallocene-catalyzed ethylene-based polymer wax [manufactured by Mitsui Chemicals, Inc., product name: EXCEREX 40800T, weight average molecular weight: 6,900] was used to obtain a melt-blown nonwoven fabric having a basis weight of 40 g/m², to obtain a three-layer nonwoven fabric laminate. Properties of the resulting nonwoven fabric laminate were measured by the method described above. Results are set forth in Table 1.

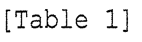

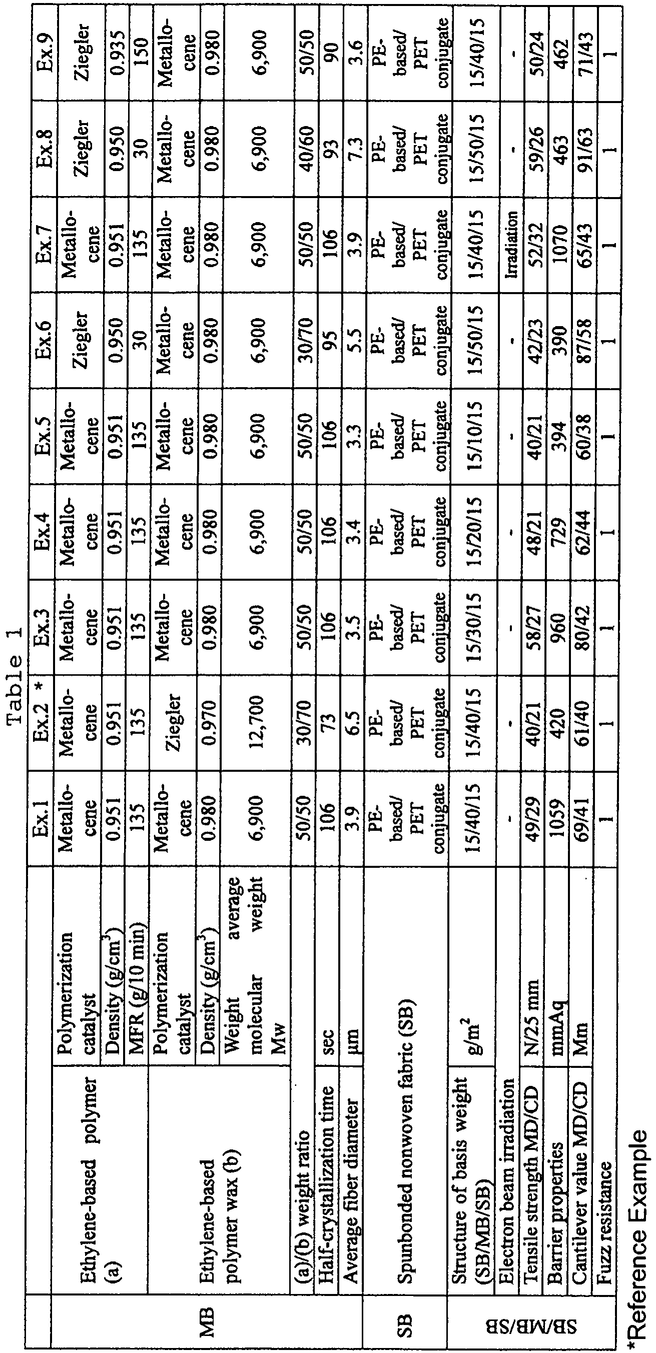

### (Example 10) (Reference Example)

The same procedure as in Example 1 was performed except that a mixture of 50 parts by weight of a metallocene-catalyzed ethylene/1-hexene copolymer [manufactured by Prime Polymer Co., Ltd., product name: EVOLUE H SP50800P, density: 0.951 g/cm³, MFR: 135 g/10 min] and 50 parts by weight of a Ziegler-catalyzed ethylene-based polymer wax [manufactured by Mitsui Chemicals, Inc., product name: Highwax 400P, density: 0.980 g/cm³, weight average molecular weight: 6,800] was used to obtain a melt-blown nonwoven fabric having a basis weight of 40 g/m², to obtain a three-layer nonwoven fabric laminate. Properties of the resulting nonwoven fabric laminate were measured by the method described above. Results are set forth in Table 2.

### (Example 11) (Reference Example)

The same procedure as in Example 1 was performed except that a mixture of 50 parts by weight of a Ziegler-catalyzed ethylene/1-butene copolymer [Prime Polymer Co., Ltd.: prototype, density: 0.935 g/cm³, MFR: 150 g/10 min] and 50 parts by weight of a Ziegler-catalyzed ethylene-based polymer wax [manufactured by Mitsui Chemicals, Inc., product name: Highwax 400P, density: 0.980 g/cm³, weight average molecular weight: 6,800] was used to obtain a melt-blown nonwoven fabric having a basis weight of 40 g/m², to obtain a three-layer nonwoven fabric laminate. Properties of the resulting nonwoven fabric laminate were measured by the method described above. Results are set forth in Table 2.

### (Example 12) (Reference Example)

The same procedure as in Example 1 was performed except that a mixture of 50 parts by weight of a Ziegler-catalyzed ethylene/1-butene copolymer [Prime Polymer Co., Ltd.: prototype, density: 0.935 g/cm³, MFR: 150 g/10 min] and 50 parts by weight of a Ziegler-catalyzed ethylene-based polymer wax [manufactured by Mitsui Chemicals, Inc., product name: Highwax 400P, density: 0.980 g/cm³, weight average molecular weight: 6,800] was used to obtain a melt-blown nonwoven fabric having a basis weight of 15 g/m², to obtain a three-layer nonwoven fabric laminate. Properties of the resulting nonwoven fabric laminate were measured by the method described above. Results are set forth in Table 2.

### (Comparative Example 1)

The same procedure as in Example 1 was performed except that the spunbonded nonwoven fabric employed in Example 1 was replaced with a spunbonded nonwoven fabric formed from a concentric core-sheath conjugate fiber having a core percentage of 20% by weight (core:sheath = 20:80 in weight ratio) (PE-based/PP conjugate) of an ethylene/1-butene copolymer [manufactured by Prime Polymer Co., Ltd., product name: NEO-ZEX NZ50301, density: 0.950 g/cm³, MFR (measured in accordance with ASTM D1238 at a temperature of 190 °C under a load of 2.16 kg) : 30 g/10 min] serving as a sheath-forming ethylene-based copolymer and a propylene polymer [manufactured by Mitsui Chemicals, Inc., product name: S119, density: 0.910 g/cm³, MFR (measured in accordance with ASTM D1238 at a temperature of 230°C under a load of 2.16 kg): 60 g/10 min] serving as a core-forming resin, to obtain a three-layer nonwoven fabric laminate. The resulting nonwoven fabric laminate was irradiated with electron beam at 45 KGy, and then was allowed to stand at 60°C for 1 week, which was followed by measurement. Then, properties of the nonwoven fabric laminate were measured by the method described above. Results are set forth in Table 2.

### (Comparative Example 2)

The same procedure as in Example 12 was performed except that the spunbonded nonwoven fabric employed in Example 12 was replaced with the spunbonded nonwoven fabric formed from the concentric core-sheath conjugate fiber (PE-based/PP conjugate) employed in Comparative Example 1, to obtain a three-layer nonwoven fabric laminate. The resulting nonwoven fabric laminate was irradiated with electron beam at 45 KGy, and allowed to stand still at 60°C for 1 week, which was followed by measurement. Properties of the nonwoven fabric laminate were measured by the method described above. Results are set forth in Table 2.

### (Comparative Example 3)

The same procedure as in Example 11 was performed except that the spunbonded nonwoven fabric employed in Example 11 was replaced with the spunbonded nonwoven fabric formed from the concentric core-sheath conjugate fiber (PE-based/PP conjugate) employed in Comparative Example 1, to obtain a three-layer nonwoven fabric laminate. The resulting nonwoven fabric laminate was irradiated with electron beam at 45 KGy, and allowed to stand at 60°C for 1 week, which was followed by measurement. Then, properties of the nonwoven fabric laminate were measured by the method described above. Results are set forth in Table 2.

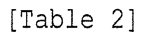

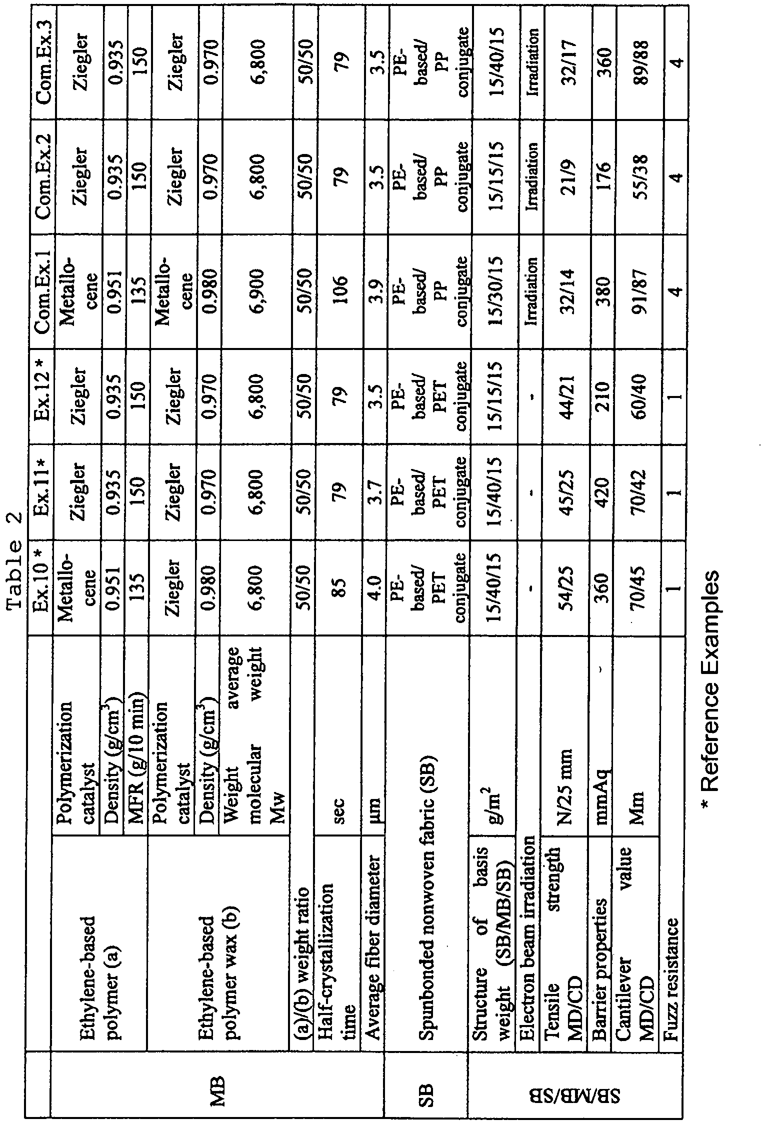

In Table 1 and Table 2, it is demonstrated that the nonwoven fabric laminate obtained by laminating the melt-blown nonwoven fabric (A) comprising the ethylene-based polymer resin composition, and the spunbonded nonwoven fabric comprising the conjugate fiber formed from the polyester (x) and the ethylene-based polymer (y) such that part of the fiber surface is the ethylene-based polymer (y), even after irradiated with electron beam, exhibits no reduction in tensile strength and barrier properties, as is clear from the comparison between Example 1 and Example 7. On the other hand, it is demonstrated that the nonwoven fabric laminates obtained by laminating the spunbonded nonwoven fabric comprising the PE-based/PP-based conjugate fiber (Comparative Examples 1 to 3), after irradiated with electron beam, exhibits reduced tensile strength and inferior barrier properties.

In addition, it is clear from the comparison between Example 4 and Example 6 or Example 8 that the reduction in the average fiber diameter of the fibers forming the melt-blown nonwoven fabric provides a nonwoven fabric laminate excellent in barrier properties, even if the basis weight of the melt-blown nonwoven fabric is reduced.

### INDUSTRIAL APPLICABILITY

The nonwoven fabric laminate of the present invention is applicable to a whole range of sanitary materials, daily commodities, industrial materials and medical materials. The nonwoven fabric laminate of the present invention, which is excellent particularly in softness, breathability and barrier properties, is employable for various clothing uses, for example disposable diapers, sanitary napkin, base cloth such as poultices, materials for e.g., bed covers. The nonwoven fabric laminate of the present invention, which is capable of being disinfection/sterilization-treated with electron beam or gamma ray, is stable particularly with respect to electron beam or gamma ray applied upon sterilization/disinfection, and thus suitably employable as materials for gowns, caps, drapes, masks, gauzes and various protecting clothes. Furthermore, the nonwoven fabric laminate of the present invention, because of its satisfactory after-processability such as heat-sealability, is applicable to a whole range of daily commodities including oxygen scavengers, portable body warmers, heated poultices, masks, uses for packaging various kinds of powders, semi-solid, gel-like or liquid substances, CD (compact disk) bags, food packaging materials and clothing covers. For the same reason, the nonwoven fabric laminate of the present invention is suitably employable for automotive interiors and various backing materials. The nonwoven fabric laminate of the present invention, which is formed from fine fibers, is widely applicable as liquid filter or air filter materials.

## Claims

1. A nonwoven fabric laminate obtained by laminating a spunbonded nonwoven fabric on at least one surface of a melt-blown nonwoven fabric (A), the melt-blown nonwoven fabric (A) comprising fibers of an ethylene-based polymer resin composition of an ethylene-based polymer (a) having a melt flow rate of 10 to 250 g/10 min and an ethylene-based polymer wax (b) comprising a metallocene-catalyzed ethylene-based polymer wax and having a weight average molecular weight of 6,000 to 15,000, at a weight ratio of (a)/(b) in the range of 80/20 to 20/80, the spunbonded nonwoven fabric comprising a conjugate fiber formed from a polyester (x) and an ethylene-based polymer (y) such that at least part of the fiber surface is the ethylene-based polymer (y).

2. The nonwoven fabric laminate according to Claim 1, wherein the conjugate fiber is a concentric or eccentric core-sheath type conjugate fiber composed of a core formed from the polyester-based polymer (x) and a sheath formed from the ethylene-based polymer (y), or a side-by-side type conjugate fiber formed from the polyester-based polymer (x) and the ethylene-based polymer (y).

3. The nonwoven fabric laminate according to Claim 1, which has a water pressure resistance, measured according to JIS L 1096, of not less than 500 mmAq.

4. The nonwoven fabric laminate according to Claim 1, wherein the melt-blown nonwoven fabric (A) has a basis weight of 10 to 50 g/m².

5. The nonwoven fabric laminate according to Claim 1, wherein fibers forming the melt-blown nonwoven fabric (A) have an average fiber diameter of 0.5 to 8 µm.

6. The nonwoven fabric laminate according to Claim 1, wherein the ethylene-based polymer (a) comprises a metallocene-catalyzed ethylene-based polymer.

7. The nonwoven fabric laminate according to Claim 1, wherein the ethylene-based polymer (a) has a melt flow rate of 50 to 150 g/10 min.

8. The nonwoven fabric laminate according to Claim 1, wherein the ethylene-based polymer composition has a half-crystallization time, measured according to differential scanning calorimetry measurements (DSC), of not less than 87 sec.

9. The nonwoven fabric laminate according to Claim 1, which is bonded by thermal fusion bonding.

10. A medical clothing comprising the nonwoven fabric laminate according to any one of Claims 1 to 9.

11. A drape comprising the nonwoven fabric laminate according to any one of Claims 1 to 9.

12. A medical clothing obtained by sterilizing the nonwoven fabric laminate according to any one of Claims 1 to 9 through irradiation with electron beam or gamma ray.

13. A drape obtained by sterilizing the nonwoven fabric laminate according to any one of Claims 1 to 9 through irradiation with electron beam or gamma ray.

## Patentansprüche

1. Vliesstofflaminat, erhalten durch Laminieren eines Spinnvlieses auf mindestens eine Oberfläche eines schmelzgeblasenen Vlieses (A), wobei das schmelzgeblasene Vlies (A) Fasern aus einer Ethylen-basierten Polymerharzzusammensetzung von einem Ethylen-basierten Polymer (a) mit einer Schmelzflussrate von 10 bis 250 g/10 min und einem Ethylen-basierten Polymerwachs (b), das ein Metallocen-katalysiertes Ethylen-basiertes Polymerwachs umfasst und ein gewichtsmittleres Molekulargewicht von 6.000 bis 15.000 aufweist, in einem Gewichtsverhältnis von (a)/(b) im Bereich von 80/20 bis 20/80 umfasst, wobei das Spinnvlies eine konjugierte Faser umfasst, die aus einem Polyester (x) und einem Ethylen-basierten Polymer (y) so gebildet ist, dass mindestens ein Teil der Faseroberfläche das Ethylen-basierte Polymer (y) ist.

2. Vliesstofflaminat gemäß Anspruch 1, wobei die konjugierte Faser eine konjugierte Faser vom konzentrischen oder exzentrischen Kern-Hülle-Typ, zusammengesetzt aus einem Kern, der aus dem Polyester-basierten Polymer (x) gebildet ist, und einer Hülle, die aus dem Ethylen-basierten Polymer (y) gebildet ist, oder eine konjugierte Faser vom Seite-an-Seite-Typ, gebildet aus dem Polyester-basierten Polymer (x) und dem Ethylen-basierten Polymer (y), ist.

3. Vliesstofflaminat gemäß Anspruch 1, das eine Wasserdruckfestigkeit, gemessen gemäß JIS L 1096, von nicht weniger als 500 mmAq aufweist.

4. Vliesstofflaminat gemäß Anspruch 1, wobei das schmelzgeblasene Vlies (A) ein Flächengewicht von 10 bis 50 g/m² aufweist.

5. Vliesstofflaminat gemäß Anspruch 1, wobei Fasern, die das schmelzgeblasene Vlies (A) bilden, einen durchschnittlichen Faserdurchmesser von 0,5 bis 8 µm aufweisen.

6. Vliesstofflaminat gemäß Anspruch 1, wobei das Ethylen-basierte Polymer (a) ein Metallocen-katalysiertes Ethylen-basiertes Polymer umfasst.

7. Vliesstofflaminat gemäß Anspruch 1, wobei das Ethylen-basierte Polymer (a) eine Schmelzflussrate von 50 bis 150 g/10 min aufweist.

8. Vliesstofflaminat gemäß Anspruch 1, wobei die Ethylen-basierte Polymerzusammensetzung eine Halbkristallisationszeit, gemessen durch dynamische Differenzkalorimetriemessungen (DSC), von nicht weniger als 87 Sekunden aufweist.

9. Vliesstofflaminat gemäß Anspruch 1, das durch thermisches Schmelzverbinden verbunden ist.

10. Medizinische Kleidung, umfassend das Vliesstofflaminat gemäß einem der Ansprüche 1 bis 9.

11. Tuch, umfassend das Vliesstofflaminat gemäß einem der Ansprüche 1 bis 9.

12. Medizinische Kleidung, erhalten durch Sterilisieren des Vliesstofflaminats gemäß einem der Ansprüche 1 bis 9 durch Bestrahlung mit einem Elektronenstrahl oder Gammastrahlen.

13. Tuch, erhalten durch Sterilisieren des Vliesstofflaminats gemäß einem der Ansprüche 1 bis 9 durch Bestrahlung mit einem Elektronenstrahl oder Gammastrahlen.

## Revendications

1. Stratifié de tissu non-tissé obtenu en stratifiant un tissu non-tissé filé-lié sur au moins une surface d'un tissu non-tissé soufflé fondu (A), le tissu non-tissé soufflé fondu (A) comprenant des fibres d'une composition de résine polymère à base d'éthylène d'un polymère à base d'éthylène (a) ayant un indice de fluidité à chaud de 10 à 250 g/10 min et une cire polymère à base d'éthylène (b) comprenant une cire polymère à base d'éthylène catalysée par métallocène et ayant un poids moléculaire moyen en poids de 6 000 à 15 000, à un rapport pondéral de (a)/(b) dans l'intervalle de 80/20 à 20/80, le tissu non-tissé filé-lié comprenant une fibre conjuguée formée d'un polyester (x) et d'un polymère à base d'éthylène (y) de telle sorte qu'au moins une partie de la surface des fibres est le polymère à base d'éthylène (y).

2. Stratifié de tissu non-tissé selon la revendication 1, dans lequel la fibre conjuguée est une fibre conjuguée concentrique ou excentrique du type à gaine et noyau composée d'un noyau formé du polymère à base de polyester (x) et d'une gaine formée à partir du polymère à base d'éthylène (y), ou une fibre conjuguée de type côte-à-côte formée du polymère à base de polyester (x) et du polymère à base d'éthylène (y).

3. Stratifié de tissu non-tissé selon la revendication 1, qui a une résistance à la pression de l'eau, mesurée selon la JIS L 1096, d'au moins 500 mm d'eau.

4. Stratifié de tissu non-tissé selon la revendication 1, dans lequel le tissu non-tissé soufflé fondu (A) a un poids de base de 10 à 50 g/m².

5. Stratifié de tissu non-tissé selon la revendication 1, dans lequel des fibres formant le tissu non-tissé soufflé fondu (A) ont un diamètre de fibre moyen de 0,5 à 8 µm.

6. Stratifié de tissu non-tissé selon la revendication 1, dans lequel le polymère à base d'éthylène (a) comprend un polymère à base d'éthylène catalysé par métallocène.

7. Stratifié de tissu non-tissé selon la revendication 1, dans lequel le polymère à base d'éthylène (a) a un indice de fluidité à l'état fondu de 50 à 150 g/10 min.

8. Stratifié de tissu non-tissé selon la revendication 1, dans lequel la composition de polymère à base d'éthylène a un temps de demi-cristallisation, mesuré selon des mesures de calorimétrie à balayage différentiel (DSC), d'au moins 87 secondes.

9. Stratifié de tissu non-tissé selon la revendication 1, qui est lié par une liaison par fusion thermique.

10. Vêtement médical comprenant le stratifié de tissu non-tissé selon l'une quelconque des revendications 1 à 9.

11. Drapé comprenant le stratifié de tissu non-tissé selon l'une quelconque des revendications 1 à 9.

12. Vêtement médical obtenu en stérilisant le stratifié de tissu non-tissé selon l'une quelconque des revendications 1 à 9 par irradiation avec un faisceau d'électrons ou un rayon gamma.

13. Drapé obtenu en stérilisant le stratifié de tissu non-tissé selon l'une quelconque des revendications 1 à 9 par irradiation avec un faisceau d'électrons ou un rayon gamma.
